## Europäisches Patentamt
## European Patent Office
## Office européen des brevets

(19)

(11) Numéro de publication: **0 083 534**
**B1**

(12) **FASCICULE DE BREVET EUROPEEN**

(45) Date de publication du fascicule du brevet: **01.06.88**

(21) Numéro de dépôt: **82402370.9**

(22) Date de dépôt: **23.12.82**

(51) Int. Cl.⁴: **G 01 S 1/04**, G 01 S 1/56, H 01 Q 3/26

(54) **Système d'atterrissage hyperfréquence à protection contre le brouillage.**

(30) Priorité: **31.12.81 FR 8124576**

(43) Date de publication de la demande:
**13.07.83 Bulletin 83/28**

(45) Mention de la délivrance du brevet:
**01.06.88 Bulletin 88/22**

(84) Etats contractants désignés:
**DE GB IT NL**

(56) Documents cités:
**US-A-3 435 453**
**US-A-4 178 581**

**IEEE TRANSACTIONS ON ANTENNAS AND PROPAGATION, vol. AP-25, no. 3, mai 1977, pages 290-296, New York, USA A.R. LOPEZ :"Scanning-beam microwave landing system - Multipath-errors and antenna-design philosophy"**

(73) Titulaire: **THOMSON-CSF
173, Boulevard Haussmann
F-75379 Paris Cédex 08 (FR)**

(72) Inventeur: **Hetyei, Joseph
THOMSON-CSF SCPI 173, bld. Haussmann
F-75379 Paris Cedex 08 (FR)**
Inventeur: **Letoquart, Bruno
THOMSON-CSF SCPI 173, bld. Haussmann
F-75379 Paris Cedex (FR)**

(74) Mandataire: **Benoit, Monique et al
THOMSON-CSF SCPI 19, avenue de Messine
F-75008 Paris (FR)**

Courier Press, Leamington Spa, England.

## Description

La présente invention concerne un système d'atterrissage hyperfréquence à protection contre le brouillage.

Avant toutefois de décrire l'objet de l'invention, il ne paraît pas inutile de rappeler en quoi consiste un système d'atterrissage hyperfréquence qui a tendence à se substituer progressivement aux systèmes d'atterrissage dits aux instruments qui sont largement répandus dans le monde mais qui deviennent, malgré les perfectionnements dont ils sont l'objet, de moins en moins adaptés aux besoins de l'aviation moderne actuelle.

Un système d'atterrissage hyperfréquence fournit à l'aéronef toutes les informations nécessaires pour déterminer sa position par rapport à la piste d'atterrissage sous la forme d'un angle d'azimut et d'un angle de site et ainsi que de sa distance, celle-ci toutefois étant donnée par un équipement de mesure de la distance (DME) associé. Le système MLS sigle sous lequel le système d'atterrissage hyperfréquence est connu (Microwave Landing System) est dit anamétrique car le mesure est effectuée à bord de l'aéronef à partir des informations émises par la station MLS située au sol dont l'émission est destinée à tous les aéronefs se trouvant dans sa couverture. Chaque aéronef détermine sa propre position à partir des informations émises par la station sans entrer en communication bilatérale avec elle.

Une installation au sol MLS comporte généralement deux stations au sol, l'une envoyant un message azimut et l'autre envoyant un message site, une troisième station DME (Distance Measurement Equipment) fournit un message distance. Dans ce qui suit toutefois, il ne sera plus fait allusion à cette station. De même, on ne s'occupera pas de l'équipement à bord de l'aéronef qui exploite les informations émises par les stations MLS au sol. A l'aide de ces informations, l'aéronef détermine sa position angulaire (azimut et site) et sa distance par rapport à l'axe et à un point de référence défini de la piste d'atterrissage.

Dans son principe une mesure angulaire au sol azimut et/ou site est effectuée à partir d'une antenne créant un faisceau étroit en forme d'éventail qui balaie la section angulaire de la couverture MLS et la position angulaire de l'avion est déterminée par le balayage aller eetour du faisceau, en mesurant l'intervalle de temps entre deux impulsions reçues par l'avion, une à chaque passage du faisceau.

Le MLS assure un certain nombre de fonctions, mais dans ce qui suit on ne s'intéressa qu'aux fonctions azimut et site.

Ces fonctions avec les autres sont émises en partage de temps. Une émission s'effectue sur une seule fréquence porteuse attribuée à la station angulaire. La partie mesure angulaire, balayage du faisceau, est effectuée dans modulation de la porteuse, la transmission des données est effectuée en modulation DPSK, modulation par phase différentielle.

Dans un système MLS, l'émission relative à une fonction commence toujours par un préambule émis par un antenne à couverture sectorielle, couvrant la totalité du volume MLS, préambule qui assure la synchronisation de la séquence de mesure à bord et donne l'identité de la fonction angulaire qui va suivre, azimut ou site. L'émission du préambule est suivie donc par l'émission des balayages "aller" et "retour" du faisceau battant créé par une antenne à balayage électronique comme on l'a déjà précisé, la mesure à bord de l'aéronef du temps qui s'écoule entre deux passages successifs du faisceau battant sur l'aéronef permettant la mesure angulaire.

La description du système MLS qui vient d'être donnée peut être trouvée avev plus de détails dans les deux articles suivants:

—le MLS, un exemple d'utilisation du microprocesseur, de B. Letoquart et J. M. Skrzypczak paru dans la revue "Navigation" d'avril 1981;

—the MLS in France, paru dans la revue "Microwave Journal" May 1981, pages 113 à 120.

On constate cependant dans la phase de fonctionnement du système MLS, relative à l'émission du préambule puis de la fonction angulaire que l'antenne sectorielle, qui émet le préambule de la fonction et couvre le secteur de balayage proportionnel présente un gain inférieur à celui de l'antenne à faisceau battant. Cette différence de gain entre les antennes, entraîne en cas de brouillage du système, une plus grande vulnérabilité du préambule comparée à la vulnérabilité des signaux de la mesure angulaire.

L'objet de la présente invention est de réduire cette vulnérabilité du système MLS au brouillage, principalement du préambule de la fonction considérée.

Plus précisément, l'invention a pour objet un système d'atterrissage du type MLS, comportant une protection contre le brouillage, tel que défini par la revendication 1.

D'autres caractéristiques de l'invention apparaîtront dans la description qui suit d'exemples donnés à l'aide des figures qui représentent:

—la figure 1, une représentation d'un diagramme d'antenne renforcé dans une direction donnée;

—la figure 2, une représentation d'un diagramme d'antenne renforcé dans la direction de l'axe azimut;

—la figure 3, un diagramme schématique de l'alimentation des antennes dans un système MLS selon l'art antérieur;

—la figure 4, un diagramme schématique de l'alimentation des antennes d'un système MLS selon l'invention, lorsque les centres de phases des deux antennes sont confondus;

—la figure 5, un diagramme schématique des deux antennes quand leurs centres de phase ne sont pas confondus;

—et la figure 6, un diagramme schématique de l'alimentation des antennes selon l'invention avec mise en phsae des diagrammes des antennes dans la direction choisie.

Les éléments portant les mêmes références sur les différentes figures assurent les mêmes fonctions en vue des mêmes résultats.

On a indiqué dans l'introduction que dans le système MLS, qui est .destiné à remplacer le système ILS, on envoie des messages angulaires d'un format tel qu'ils comprennent une partie préambule indiquant l'identité du message angulaire spécifique qui va suivre, et la partie message spécifique. Une des caractéristiques remarquables du système MLS est que le préambule est émis par une antenne sectorielle tandis que le message spécifique est émis par une antenne à balayage électronique dite antenne à faisceau battant.

Etant donné la largeur du secteur couvert par l'antenne d'émission du préambule par rapport au secteur étroit couvert par le faisceau dit en éventail rayonné par l'antenne à faisceau battant, il.est clair que le gain de l'antenne sectorielle est plus faible que le gain de l'antenne à faisceau battant. On peut montrer facilement que la largeur à 3 dB du faisceau battant étant de 4° à 1° alors que l'antenne sectorielle, par exemple azimut, a une ouverture de l'ordre de 80° (±40°), la différence entre le gain de l'antenne sectorielle et celui de l'antenne à balayage électronique est de 7 à 15 dB. Autant le faisceau du balayage électronique est étroit, autant le gain de son antenne est élevé. Le gain théorique déterminé est évidemment diminué par les différents pertes qui peuvent intervenir entre la sortie de l'émetteur et l'antenne à balayage électronique, au niveau de certains de ses constituants, par exemple les diviseurs de puissance, les déphaseurs, etc. Dans ces conditions pour une largeur du faisceau par exemple de 3°, la puissance crête rayonnée de la sorte par le faisceau battant est de 10 dB plus forte que la puissance crête rayonnée par l'antenne sectorielle.

Comme on l'a indiqué précédemment, cette différence de gain entre les deux antennes du système MLS, joue un rôle important en cas de brouillage. Le préambule émis par l'antenne sectorielle est beaucoup plus vulnérable que le signal émis par le faisceau battant. Ainsi, le préambule émis en modulation DPSK, selon les mots choisis dans le format OACI (Organisation de l'aviation civile internationale) ne tolère aucune erreur de décodage, l'erreur sur un bit rendant le message inutilisable. Un rapport signal sur brouillage supérieur ou égal à 6 dB, s'impose donc à la réception.

Ainsi un brouillage qui peut être réalisé soit par une émission continue pour laquelle le rapport du signal au brouillage est inférieur à 6 dB, soit par les impulsions d'une largeur de l'ordre de 100 µs et de fréquence de répétition convenable de l'ordre de 1000 Hz par exemple, peut empêcher le décodage du préambule et par la même occasion le décodage des données de base et des données auxiliaires transmises par l'antenne sectorielle.

Suivant l'invention, on réduit cette vulnérabilité du préambule au brouillage en renforçant, pour l'acquisition de la mesure angulaire, le préambule qui sera émis avant chaque balayage angulaire azimut ou site. La diffusion renforcée de ce préambule est assurée dans un secteur délimité, pouvant être de l'ordre de 3 à 6° par une modification du diagramme de rayonnement de l'antenne sectorielle pour assurer dans le secteur délimité un gain de l'ordre de 6 à 10 dB supérieur au gain dans le reste du diagramme. De cette façon, la réception du préambule pour le ou les aéronefs se trouvant dans la partie renforcée 1 à n du diagramme est assurée avec un gain de +8 à +10 dB, tandis que dans le reste du secteur la réception du préambule est faite avec le gain normal de l'antenne sectorielle.

L'obtention d'un tel diagramme renforcé, pour l'émission du préambule renforcé par conséquent, est réalisée suivant l'invention par l'utilisation simultanée de l'antenne sectorielle et de l'antenne à faisceau battant.

On réalise ainsi une superposition des diagrammes de rayonnement des antennes considérées, dans la direction où l'on veut émettre un préambule renforcé. Suivant l'invention également ce diagramme renforcé, en fait la partie renforcée du diagramme de rayonnement de l'antenne sectorielle, est pointé successivement dans différentes directions, préalablement à l'émission du préambule de la fonction angulaire, de façon à assurer la couverture de la totalité du secteur considéré, azimut ou site. De la sorte, au cours d'une séquence des émissions par la station MLS, le préambule est chaque fois renforcé dans une direction différente. La réception du préambule renforcé est par là même assurée pour chaque aéronef qui se trouve dans la couverture sectorielle du système MLS, et ce de façon séquentielle. En d'autres termes, suivant l'invention, l'émission du préambule est réalisée avec une augmentation du gain de l'ordre de 6 à 10 dB dans des directions bien définies qui couvrent successivement tout le secteur MLS.

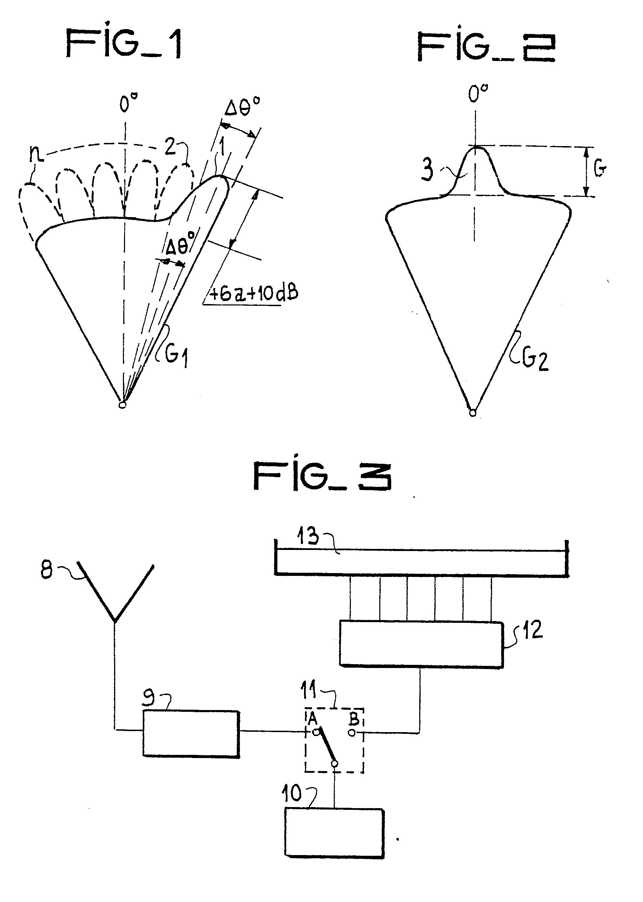

La figure 1 montre comment se présente le diagramme renforcé de l'antenne sectorielle: le renforcement comme cela ressort de la description précédente, apparaît dans un secteur relativement étroit de Δθ° repéré 1, dans un angle d'azimut de 20° par exemple, par rapport à l'azimut origine 0°. On a indiqué en pointillé les renforcements 2, ... n obtenus pour les positions successives de pointage, jusqu'à couvrir l'ensemble de la couverture MLS.

La figure 2 montre le diagramme renforcé pour la position angulaire 0°. On remarque à l'aide des diagrammes des figures 1 et 2, que le secteur étroit de largeur Δθ° correspondant à la largeur du lobe renforcé est mobile, le gain maximum que l'on peut obtenir pour chaque renforcement devant être obtenu par pas successifs dans toute la couverture sectorielle. De fait, la partie renforcée est dirigée dans une direction différant de Δθ° de sa position précédente avant de commencer chaque balayage angulaire.

Dans ce qui suit on va donner différentes solutions permettant de réaliser le diagramme d'antenne renforcé souhaité.

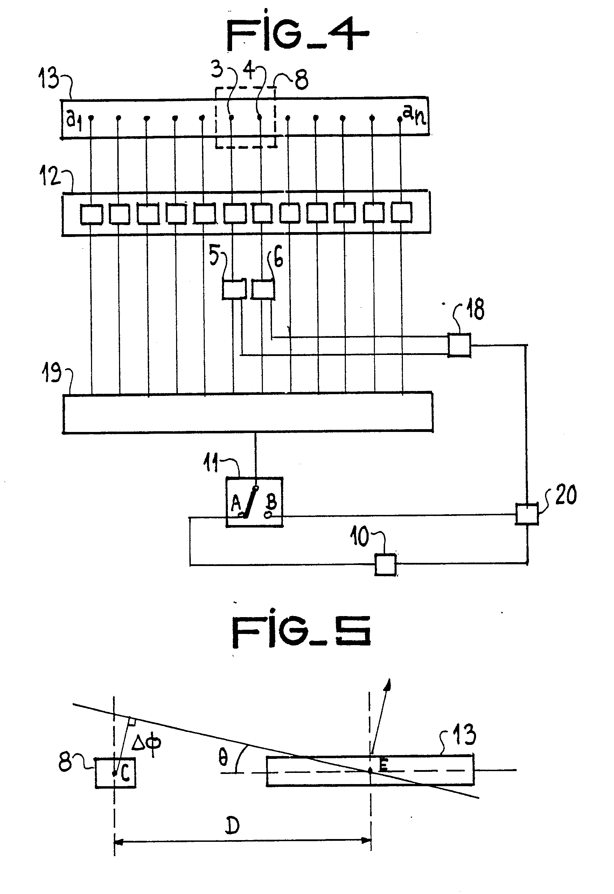

Utilisant les deux antennes existant dans les systèmes MLS, il a paru utile de donner figure 3 une représentation de l'alimentation des dites antennes suivant l'art antérieur.

L'antenne sectorielle 8 est reliée à un modulateur DPSK 9 et à l'émetteur MLS 10 à travers le commutateur 11 par sa borne A. La borne B de ce commutateur 11 est connectée aux déphaseurs 12 associés à l'antenne 13, antenne à faisceau battant. L'antenne sectorielle 8 émet le préambule tandis que l'antenne 13 à balayage électronique émet le message angulaire.

Suivant l'art antérieur, ces deux antennes sont alimentées alternativement par l'émetteur MLS 10, par l'intermédiaire du commutateur 11.

Suivant l'invention, pour réaliser la forme de diagramme souhaitée, les deux antennes sont alimentées simultanément lors de l'émission du préambule, l'antenne à faisceau battant effectuant ensuite seule l'émission angulaire.

On notera que, pour effectuer une sommation de deux diagrammes d'antenne, il est nécessaire de les sommer en phase, dans la zone où ils se recouvrent.

La figure 4 représente de façon schématique une première réalisation permettant d'effectuer la superposition des diagrammes de l'antenne sectorielle 8 et de l'antenne à faisceau battant dans le cas où les centres de phase des antennes sont confondus.

Dans cette réalisation schématique l'antenne à faisceau battant est représentée par 13 avec ses antennes élémentaires $a_1$ à $a_n$. Les deux antennes élémentaires repérées 3 et 4 sont utilisées pour créer le diagramme de rayonnement de l'antenne sectorielle, tout en continuant à jouer leur rôle dans l'antenne à faisceau battant. En 12 on trouve l'ensemble des déphaseurs associés aux antennes élémentaires $a_1$ à $a_n$. En 19 on trouve le répartiteur d'énergie associé à l'antenne à faisceau battant 13 qui est connectée à l'émetteur MLS 10 par la borne A du commutateur 11. L'antenne sectorielle 8 est constituée, comme cela a été dit, par les deux antennes élémentaires en position centrale, 3 et 4. Ces deux antennes élémentaires sont connectées à travers les déphaseurs respectifs qui leur sont associés à des diviseurs de puissance 5 et 6 connectés d'une part au répartiteur 19 et d'autre part à un dispositif de répartition 18 connecté à l'émetteur MLS par l'intermédiaire d'un diviseur de puissance 20.

Suivant la position du commutateur 11, l'émetteur MLS 10 alimente soit l'ensemble des antennes à faisceau battant et sectorielle lorsqu'il est sur sa position B, réalisant la superposition des diagrammes de rayonnement des deux antennes pour l'émission du préambule, soit uniquement l'antenne à faisceau battant quand il est sur sa position A.

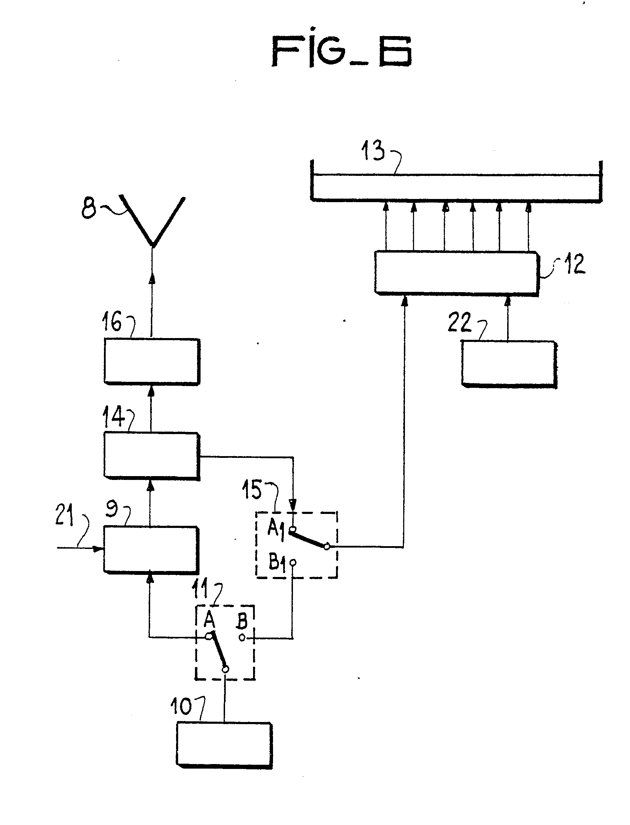

La figure 5 représente une deuxième réalisation de l'antenne suivant l'invention lorsque les centres de phase des deux antennes ne sont pas confondus. Les centres de phase E et C étant séparés par une distance D, il faut envisager un déphasage $\Delta\phi$ à ajouter, dans le cas de la figure à l'antenne sectorielle 8; ce déphasage $\Delta\phi$ vaut $2\pi D/\lambda \sin\theta$, avec $\theta$ donnant la direction de pointage renforcé. On pourrait également retrancher le déphasage $\Delta\phi$ à l'antenne à balayage électronique 13.

La figure 6 donne le schéma complet de la réalisation quand les centres de phase sont distincts.

L'émetteur MLS 10 alimente le modulateur DPSK 9 à travers un commutateur 11 par sa borne A. Ce modulator commandé par la commande 21 est connecté à un diviseur de puissance 14 qui est connecté directement à un déphaseur 16, relié à l'antenne sectorielle 8. La borne B du commutateur 11 est reliée à la borne B1 d'un second commutateur 15 dont la borne A1 est connectée au diviseur de puissance 14. Ce commutateur 15 permet au diviseur de puissance 14 de diriger une partie de l'énergie de l'émetteur 10 vers l'antenne à balayage électronique 13 à travers des déphaseurs 12, commandés par la commande 22 qui agit sur le pointage du diagramme. Cette commande peut être constituée par une mémoire morte programmable contenant les différentes positions numérisées (PROM). Lorsque les commutateurs 11 et 15 sont tous deux sur leurs bornes B, B1 respectivement, l'émetteur MLS 10 est connecté directement à l'antenne à balayage électronique 13, assurant l'émission de la partie message. Au contraire, lorsque les commutateurs sont sur leurs bornes A, respectivement A1, l'émetteur MLS alimente simultanément l'antenne sectorielle et l'antenne à balayage électronique, assurant la formation d'un diagramme renforcé.

Les déphaseurs 12 associés à l'antenne à balayage électronique 13 sont mis en position par la commande 22 de pointage dit sectoriel pour que l'antenne soit dirigée dans la direction où l'on veut avoir un diagramme sectoriel renforcé émettant le préambule renforcé. Cette direction de pointage est déplacée d'un angle $\Delta\theta$ égal à la largeur du faisceau battant avant la transmission d'un nouveau préambule. Ce déplacement est effectué par modification de la commande des déphaseurs 12. Le déphaseur 16 inséré entre la sortie du diviseur de puissance 14 et l'antenne sectorielle 8 a pour rôle de modifier le signal MLS à l'entrée de l'antenne 8 pour en modifier la phase de sorte que les antennes sectorielle 8 et à faisceau battant 13 émettent en phase dans la direction de pointage choisie $\theta$.

Suivant une variante, on peut supprimer le déphaseur 16 et ajouter la phase $\Delta\phi$ à tous les déphaseurs de l'ensemble 12, à l'aide d'une logique de commande, non décrite.

On a ainsi décrit un système d'atterrissage hyperfréquence dit MLS à protection renforcée contre le brouillage qui affecte plus particulièrement le préambule.

On notera, ce qui est tout à fait normal et admis que le système suivant l'invention ne fonctionne que lorsque la puissance crête du brouiller reçue à bord de l'aéronef, reste quelques dB au-dessous de la puissance des impulsions angulaires, l'acquistion et la vérification de la validation d'une mesure étant toujours fondées sur le critère que

l'impulsion utile doit avoir la plus grande amplitude parmi les impulsions reçues pendant le temps du balayage du faisceau battant.

On notera également, que la puissance nécessaire pour brouiller le message angulaire transmis par l'antenne à faisceau battant n'est pas changée. En effet, lorsque l'on dispose de cette puissance, le système protégé exige que le brouiller se rapproche à une certaine distance du système MLS, alors que le système non protégé peut être brouillé par l'intermédiaire de son préambule à partir d'une distance double ou triple.

On notera que le système protégé reste utilisable par les récepteurs normalisés en cas de non brouillage et permet de continuer la mesure angulaire, avec des récepteurs adéquats, en cas de perturbation des préambules. De fait, le préambule non renforcé reste disponible dans tout le secteur couvert par l'antenne sectorielle.

On notera également qu'avec une émission MLS réalisé suivant l'invention, en cas de brouillage, l'aéronef ne reçoit pas l'information préambule régulièrement avant chaque balayage angulaire, mais seulement lorsque l'aéronef se trouve dans le faisceau renforcé qui rayonne le préambule.

Pour permettre la mesure angulaire sans réception systèmatique du préambule, ce qui arrive lorsque au moment de l'émission suivante par exemple du préambule renforcé dans une direction modifiée par rapport à la précédente, l'aéronef ne se trouve pas dans la partie renforcée du diagramme, l'émission des séquences des émetteurs au sol transmettant les informations azimut et site, doit être régulière et prédéterminée et le préambule renforcé contient toutes les informations nécessaires pour identifier les séquences d'émission de période T+f(t), f(t) étant connu sous son nom anglo-saxon de "jitter" et représentant un intervalle de temps qui est une fonction périodique du temps, croissante et décroissante, telle une fonction sinusoïdale. Ce jitter permet d'éviter les multitrajets synchrones, dus très souvent à la rotation des hélices d'avions ou des pales d'hélicoptères. En décodant le préambule qu'il reçoit, l'aéronef a connaissance de la fonction qu'il va recevoir et de sa place dans les séquences émises. En l'absence de préambule ultérieurement ou plus exactement entre les réceptions des préambules renforcés, l'aéronef peut poursuivre la mesure angulaire.

**Revendications**

1. Système d'atterrisage hyperfréquence comportant une protection contre le brouillage, émettant des signaux comportant une partie préambule, émise par une antenne sectorielle (8), et une partie message angulaire spécifique, émise par une antenne à balayage électronique à faisceau battant (13), dont le gain est supérieur au gain de l'antenne sectorielle; ledit système étant caractérisé en ce que le préambule est émis dans un diagramme de rayonnement renforcé obtenu par superposition du diagramme de rayonnement de l'antenne à faisceau battant (13) et du diagramme de rayonnement de l'antenne sectorielle.

2. Système d'atterrissage suivant la revendication 1, caractérisé en ce que le renforcement du diagramme d'émission du préambule se fait successivement suivant un certain nombre de directions prédéfinies (1 à n), dont l'ensemble couvre la totalité du diagramme d'émission du préambule.

3. Système d'atterrissage suivant l'une des revendications précédentes, caractérisé en ce que la superposition des diagrammes de rayonnement de l'antenne sectorielle (8) et de l'antenne à faisceau battant (13) est réalisée avec les centres de phase (E, C) des deux antennes confondus.

4. Système d'atterrissage suivant l'une des revendications 1 ou 2, caractérisé en ce que les centres de phase (E, C) des deux antennes sectorielle (8) et à faisceau battant (13) étant séparés, la mise en phase des diagrammes de rayonnement des antennes est obtenu par addition d'un déphasage produit par un déphaseur (16) à l'une des antennes (8) ou soustraction de ce même déphasage à l'autre antenne (13), pour une direction de pointage de renforcement (1 à n) du diagramme.

5. Système d'atterrissage suivant l'une des revendications précédentes, caractérisé en ce qu'il comporte un diviseur de puissance (14) connecté à l'émetteur (10) du système, délivrant une partie de la puissance d'émission à l'antenne sectorielle (8) et une autre partie à l'antenne à faisceau battant (13) à travers des circuits déphaseurs (12) associés à cette dernière et un dispositif de commande de pointage (22) connecté aux circuits déphaseurs (12), déterminant les directions successives de pointage du faisceau de l'antenne à faisceau battant (13), dans lesquelles le diagramme est renforcé.

6. Système d'atterrissage suivant la revendication 5, caractérisé en ce qu'il comporte un premier commutateur (11) à deux positions (A, B) et un second commutateur (15) à deux positions (A1, B1), le premier commutateur (11) connectant par sa première borne (A) l'émetteur (10) du système à un circuit modulateur (9) générant le préambule des signaux à transmettre, puis au diviseur de puissance (14) alimentant l'antenne sectorielle (8), et connectant par sa seconde borne (B), connectée à la seconde borne (B1) du second commutateur (15), l'émetteur (10) du système directement à l'antenne à faisceau battant (13) à travers les circuits déphaseurs (12) associés à cette dernière antenne.

7. Système d'atterrissage suivant la revendication 6, caractérisé en ce que, pour les deux commutateurs (10, 15) sur leur première position (A, A1), l'émetteur (10) du système est connecté simultanément à l'antenne sectorielle (8) et à l'antenne à faisceau battant (13), créant ainsi la superposition des diagrammes de rayonnement desdites antennes.

8. Système d'atterrissage suivant la revendication 7, caractérisé en ce qu'il comporte un déphaseur (16) connecté entre le diviseur de puissance (14) et l'antenne sectorielle (8), modifiant d'une valeur $\Delta\theta$ la phase du signal appliqué à l'antenne sectorielle (8) de façon que les deux antennes sectorielles (8) et à faisceau battant (13) rayonnent en phase.

9. Système d'atterrissage suivant la revendication 7, caractérisé en ce qu'un déphasage—$\Delta\theta$ est appliqué à tous les déphaseurs des circuits déphaseurs (12) de l'antenne à faisceau battant, pour assurer le rayonnement en phase des deux antennes sectorielle (8) et à faisceau battant (13).

10. Système d'atterrissage suivant la revendication 3, caractérisé en ce que l'antenne sectorielle (8) est formée par deux antennes élémentaires centrales (3, 4) de l'antenne à balayage électronique (13), ces deux antennes élémentaires étant connectées à travers un premier et un deuxième diviseur de puissance (5, 6) à l'émetteur (10) du système, à travers deux circuits d'alimentation séparés, l'un comportant un commutateur (11) et un répartiteur d'énergie (19) et étant associé à l'antenne à faisceau battant (13), l'autre comportant un troisième diviseur de puissance (20) et un répartiteur (18) connecté aux deux premiers diviseurs de puissance (5, 6), et étant associé à l'antenne sectorielle (8), le commutateur (11) sur l'une de ses positions (B) connectée au troisième diviseur de puissance (20) alimentant simultanément les deux antennes (13, 8) dont les centres de phase sont confondus.

**Patentansprüche**

1. Mikrowellenlandesystem mit einem Schutz gegen Störungen, das Signale mit einem Vorspannteil aussendet, der von einer Sektorantenne (8) ausgesandt wird, und mit einem spezifischen Winkelnachrichtenteil, der von einer elektronisch abgetasteten Antenne mit schwenkendem Strahl (13) ausgesandt wird, wobei der Gewinn dieser Antenne größer als der der Sektorantenne ist, dadurch gekennzeichnet, daß der Vorspann in einem verstärkten Strahlungsdiagramm ausgesandt wird, das durch Überlagerung des Strahlungsdiagramms der Antenne mit schwenkendem Strahl (13) und des Strahlungsdiagramms der Sektorantenne erhalten wird.

2. Landesystem nach Anspruch 1, dadurch gekennzeichnet, daß die Verstärkung des Strahlungsdiagramms zur Aussendung des Vorspanns nacheinander in einer gewissen Anzahl von vorgegebenen Richtungen (1 bis n) erfolgt, die gemeinsam das ganze Sendediagramm dess Vorspanns überdecken.

3. Landesystem nach einem der vorhergehenden Ansprüche, dadurch gekennzeichnet, daß die Überlagerung der Strahlungsdiagramme der Sektorantenne (8) und der Antenne mit schwenkendem Strahl (13) so erfolgt, daß die Phasenzentren (E, C) der beiden Antenne zusammenfallen.

4. Landesystem nach einem der Ansprüche 1 oder 2, dadurch gekennzeichnet, daß die Phasenzentren (E, C) der Sektorantenne (8) und der Antenne mit schwenkendem Strahl (13) getrennt sind und die Strahlungsdiagramme der Antennen durch Addition einer Phasenverschiebung in Phase gebracht werden, die durch einen Phasenschieber (16) in einer der Antennen (8) oder Subtraktion dieser gleichen Phasenverschiebung an der anderen Antenne (13) für eine der Verstärkungszielrichtungen (1 bis n) des Diagramms erzeugt werden.

5. Landesystem nach einem der vorhergehenden Ansprüche, dadurch gekennzeichnet, daß es einen Leistungsteiler (14) aufweist, der an den Sender (10) des Systems angeschlossen ist und einen Teil der Sendeleistung an die Sektorantenne (8) und einen anderen Teil an die Antenne mit schwenkendem Strahl (13) über dieser Antenne zugeordnete Phasenschieberkreise (12) liefert, und daß eine Zielsteuervorrichtung (22) vorgesehen ist, die mit dem Phasenschieberkreisen (12) verbunden ist und die aufeinanderfolgenden Zielrichtungen des Strahls der Antenne mit schwenkendem Strahl (13) bestimmt ist, in denen das Diagramm verstärkt ist.

6. Landesystem nach Anspruch 5, dadurch gekennzeichnet, daß es eine ersten Umschalter (11) mit zwei Schaltposition (A, B) und einen zweiten Umschalter (15) mit zwei Schaltpositionen (A1, B1) aufweist, wobei der erste Umschalter (11) mit seinem ersten Anschluß (A) den Sender (10) des Systems an einen Modulatorkreis (9) anschließt, der den Vorspann der zu übertragenden Signale erzeugt, von wo er weiter zum Leistungsteiler (14) gelangt, der die Sektorantenne (8) speist, und mit seinem zweiten Anschluß (B), der mit dem zweiten Anschluß (B1) des zweiten Umschalters (15) verbunden ist, den Sender (10) des Systems unmittelbar an die Antenne mit Schwenkstrahl (13) über die Phasenschieberkreise (12) anschließt, die dieser zuletztgenannten Antenne zugeordnet sind.

7. Landesystem nach Anspruch 6, dadurch gekennzeichnet, daß für die beiden Umschalter (10, 15) in ihrer ersten Position (A, A1) der Sender (10) des Systems zugleich mit der Sektorantenne (8) und der Schwenkstrahlantenne (13) verbunden ist und so die Überlagerung der Strahlungsdiagramme dieser Antennen bewirkt.

8. Landesystem nach Anspruch 7, dadurch gekennzeichnet, daß es einen Phasenschieber (16) aufweist, der zwischen den Leistungsteiler (14) und die Sektorantenne (8) eingefügt ist und die Phase des an die Sektorantenne (8) angelegten Signals um einen Wert $\Delta\theta$ verändert, so daß die beiden Antennen (8, 13) phasengleich abstrahlen.

9. Landesystem nach Anspruch 7, dadurch gekennzeichnet, daß eine Phasenverschiebung von—$\Delta\theta$ an alle Phasenschieber der Phasenschieberkreise (12) der Schwenkstrahlantenne angelegt wird, um eine phasengleiche Strahlung der beiden Antennen (8, 13) zu gewährleisten.

10. Landesystem nach Anspruch 3, dadurch gekennzeichnet, daß die Sektorantenne (8) von zwei zentralen Elementarantennen (3, 4) der Antenne mit elektronischer Abtastung (13) gebildet wird, wobei diese beiden Elementarantennen über einen ersten und einen zweiten Leistungsteiler (5, 6) mit dem Sender (10) des Systems über zwei getrennte Speisekreise verbunden sind, wobei der eine einen Umschalter (11) und einen Energieverteiler (19) aufweist und der Schwenkstrahlantenne (13) zugeordnet ist, während der andere einen zweiten Leistungsteiler (20) und einen Verteiler (18) aufweist, der an die beiden ersten Leistungsteiler (5, 6) angeschlossen ist und der Sektorantenne (8) zugeordnet ist, und daß der Umschalter (11) in einer seiner Positionen (B) an den dritten Leistungsteiler (20) angeschlossen ist, der zugleich die beiden Antennen (13, 8) speist, deren Phasenzentren zusammenfallen.

## Claims

1. A microwave landing system comprising an interference protection and transmitting signals including a preamble part transmitted by a sector antenna (8), and a specific angular message part transmitted by an electronically scanned antenna with a sweeping beam (13), the gain of which exceeds that of the sector antenna, said system being characterized in that the preamble is transmitted in a reinforced radiation diagram obtained by superposition of the radiation diagram of the sweeping beam antenna (13) and of the radiation diagram of the sector antenna.

2. A landing system according to claim 1, characterized in that the reinforcing of the preamble transmission diagram is made successively according to a certain number of predetermined directions (1 to n) the assembly of which covers the total preamble transmission diagram.

3. A landing system according to one of the preceding claims, characterized in that the superposition of the radiation diagrams of the sector antenna (8) and of the sweeping beam antenna (13) is realised so that the phase centers (E, C) of the two antennas coincide.

4. A landing system according to one of claims 1 or 2, characterized in that the phase centers (E, C) of the two antennas (8, 13) being separated, the radiation diagrams of the antennas are phase adjusted by adding to one of the antennas (8) a phase shift produced by a phase shifter (16) or by subtracting this same phase shift from the other antenna (13) for a given reinforcement direction (1 to n) of the diagram.

5. A landing system according to one of the preceding claims, characterized in that it comprises a power divider (14) connected to the transmitter (10) of the system and supplying a portion of the transmission power to the sector antenna (8) and another portion to the sweeping beam antenna (13) via phase shifting circuits (12) associated to this latter, and a sweep control device (22) connected to the phase shifting circuits (12) and determining the successive directions of the beam of the sweeping beam antenna (13), in which the diagram is reinforced.

6. A landing system according to claim 5, characterized in that it comprises a first switch (11) having two positions (A, B), and a second switch (15) having two positions (A1, B1), the first switch (11) connecting by its first terminal (A) the transmitter (10) of the system to a modulator circuit (9) producing the preamble of the signals to be transmitted, then to the power divider (14) feeding the sector antenna (8), and connecting by its second terminal (B) which is connected to the second terminal (B1) of the second switch (15), the transmitter (10) of the system directly to the sweeping beam antenna (13) through the phase shifting circuits (12) associated to this last mentioned antenna.

7. A landing system according to claim 6, characterized in that, the two switches (10, 15) being in their first position (A, A1), the transmitter (10) of the system is simultaneously connected to the sector antenna (8) and to the sweeping beam antenna (13), thus creating the superposition of the radiation diagrams of said antennas.

8. A landing system according to claim 7, characterized in that it comprises a phase shifter (16) interconnected between the power divider (14) and the sector antenna (8) and modifying the phase of the signal applied to the sector antenna (8) by a value $\Delta\theta$ in such a manner that the two antennas (8, 13) radiate in phase.

9. A landing system according to claim 7, characterized in that a phase shift $-\Delta\theta$ is applied to all the phase shifters of the phase shifting circuits (12) of the sweeping beam antenna in order to ensure the phase aligned radiation of both antennas (8, 13).

10. A landing system according to claim 3, characterized in that the sector antenna (8) is constituted by two central elementary antennas (3, 4) of the antenna with electronic sweeping (13), these two elementary antennas being connected via a first and a second power divider (5, 6) to the transmitter (10) of the system through two separated feed circuits, one comprising a switch (11) and an energy distributor (19) and being associated to the sweeping beam antenna (13), the other comprising a third power divider (20) and a distributor (18) connected to the two first power dividers (5, 6) and being associated to the sector antenna (8) the switch (11) feeding both antennas (13, 8), the phase centers of which coincide, if the switch (11) is in the position (B) connected to a third power divider (20).

# FIG_1

# FIG_2

# FIG_3

# FIG_4

# FIG_5

# FIG_6